# EUROPEAN PATENT APPLICATION

(11) **EP 4 488 303 A1**
(43) Date of publication of application: **08.01.2025**
(21) Application number: 23912648.5
(22) Date of filing: 06.12.2023
(51) Int. Cl.: C08F 210/16, C08J 5/18

(54) **POLYETHYLENE RESIN COMPOSITION**

(30) Priority: 29.12.2022 KR 20220189080; 05.12.2023 KR 20230174896
(71) Applicant: LG Chem, Ltd., Yeongdeungpo-gu Seoul 07336 (KR)
(72) Inventor: JEONG, Hyun Mook, Daejeon 34122 (KR); SONG, Christine Jisoo, Daejeon 34122 (KR); OH, Hee Su, Daejeon 34122 (KR); CHOI, Yi Young, Daejeon 34122 (KR)
(74) Representative: Hoffmann Eitle
(86) International application number: PCT/KR2023/019999
(87) International publication number: WO 2024/143973

(57) **Abstract**

The present disclosure relates to a polyethylene resin composition having excellent stretchability and process stability, and a stretched film prepared using the same.

## Description

### [TECHNICAL FIELD]

### Cross-reference to Related Application(s)

This application claims the benefit of Korean Patent Application No. 1 0-2022-0189080 filed on December 29, 2022 and Korean Patent Application No. 10-2023-0174896 filed on December 5, 2023 with the Korean Intellectual Property Office, the disclosures of which are herein incorporated by reference in their entirety.

The present disclosure relates to a polyethylene resin composition having excellent stretchability and process stability.

### [BACKGROUND ART]

There are various requirements involved in polyethylene for a food packaging film recently used. First, it should have excellent stretchability to facilitate manufacture of a film. Second, it should enable manufacture of a transparent film such that conditions and freshness of food can be confirmed. Third, the film prepared should simultaneously have excellent heat resistance and excellent mechanical properties. Finally, it should be an environment-friendly product that can be easily recycled or biodegradable according to sustainability recently emphasized. Thus, to maximize the properties, heat resistance and stretchability of high-density polyethylene (HDPE) and linear low-density polyethylene (LLDPE) to prepare resin that can be manufactured as All-PE film, a lot of research is progressing.

Particularly, although HDPE has high density and high content of high molecule, and thus, has excellent heat resistance and excellent mechanical properties, it has low content of small molecule, and thus, the prepared film has low transparency, and stretchability at the film processing temperature is inferior.

Further, it is important to manufacture a film having haze less than 50%, before stretched, for use for food purposes. To this end, a method of broadening molecular weight distribution (MWD) and increasing low molecular weight crystal distribution to the maximum to improve stretchability and transparency, has been suggested. It corresponds to a method of controlling molecular weight in HDPE to reduce high molecule distribution and increase small molecule distribution, thereby controlling the crystal structure to have excellent stretchability.

However, in case high molecule distribution is unconditionally reduced as in the above method, a melting temperature (Tm) and a crystallization temperature (Tc) are lowered to deteriorate process stability, and the processing window (Tm-Tc) decreases to make processing difficult.

Thus, to solve the above problems, it is required to control a micromolecular structure and crystal region distribution in reducing the width of decrease of ultrahigh molecular weight region and simultaneously increasing low molecular weight region.

### [DETAILED DESCRIPTION OF THE INVENTION]

### [TECHNICAL PROBLEM]

To solve the problems of the prior art, it is an object of the invention to provide a polyethylene resin composition exhibiting excellent stretchability and process stability.

It is another object of the invention to provide a stretched film prepared using the polyethylene resin composition, and exhibiting excellent stretching ratio and haze property.

### [TECHNICAL SOLUTION]

To achieve the object, according to the present disclosure, there is provided a polyethylene resin composition comprising a copolymer of ethylene and two or more kinds of C4 to C10 alpha olefin comonomers, and
satisfying the requirements of (a1) to (a3):
(a1) density (measurer at 23°C according to ISO 1183-2 method): 0.940 to 0.960 g/cm²;
(a2) in gel permeation chromatography (GPC) analysis, in the graph of molecular weight distribution curve wherein the x axis is a log value of weight average molecular weight (log Mw), and the y axis is molecular weight distribution to the log value (dW/dlog Mw), the shape of the molecular weight distribution curve is bimodal;
(a3) in the graph of molecular weight distribution curve, the area ratio of the region wherein log Mw ≥ 6.0 to the total area of the molecular weight distribution curve is 2 to 8%, and the area ratio of the region wherein log Mw ≤ 3.5 is 8 to 15%.

According to the present disclosure, there is also provided a stretched film comprising the polyethylene resin composition.

### [ADVANTAGEOUS EFFECTS]

The polyethylene resin composition according to the present disclosure exhibits excellent stretchability and process stability. Thus, a stretched film prepared using the polyethylene resin composition may exhibit excellent stretching ratio and haze property, and thus, is particularly useful for food packaging.

### [BRIEF DESCRIPTION OF THE DRAWINGS]

Fig. 1 is a graph showing a molecular weight distribution curve obtained as the result of gel permeation chromatography analysis of the polyethylene resin composition of Example 4.
Fig. 2 is a photography of the film surface of a casting film that is prepared using the polyethylene resin composition of Example 4 and is 5X8 stretched, observed with scanning electron microscope (SEM)
Fig. 3 is a photography of the film surface of a casting film that is prepared using the polyethylene resin composition of Comparative Example 4 and is 5X7 stretched, observed with scanning electron microscope (SEM).

### [DETAILED DESCRIPTION OF THE EMBODIMENTS]

As used herein, terms "a first", "a second" and the like are used to explain various constructional elements, and they are used only to distinguish one constructional element from other constructional elements.

Further, the terms used herein are only to explain specific embodiments, and are not intended to limit the invention. A singular expression may include a plural expression thereof unless the context clearly indicates otherwise. Throughout the specification, the terms "comprise", "equipped" or "have", etc. are intended to designate the existence of practiced characteristic, number, step, constructional element or combinations thereof, and they are not intended to preclude the possibility of existence or addition of one or more other characteristics, numbers, steps, constructional elements or combinations thereof.

Further, throughout the specification, the term "polyethylene" or "ethylene (co)polymer" includes both ethylene homopolymer and/or copolymer of ethylene and alpha-olefin.

Although various modifications can be made to the present disclosure and the invention may have various forms, specific examples will be illustrated and explained in detail below. However, it should be understood that these are not intended to limit the invention to specific disclosure, and that the invention includes all the modifications, equivalents or replacements thereof without departing from the spirit and technical scope of the invention.

Hereinafter, the polyethylene resin composition of the invention will be explained in detail.

The polyethylene resin composition according to the present disclosure comprises a copolymer of ethylene and two or more kinds of C4 to C10 alpha olefin comonomers, and
satisfies the requirements of (a1) to (a3):
(a1) density (measurer at 23°C according to ISO 1183-2 method): 0.940 to 0.960 g/cm²;
(a2) in gel permeation chromatography (GPC) analysis, in the graph of molecular weight distribution curve wherein the x axis is a log value of weight average molecular weight (log Mw), and the y axis is molecular weight distribution to the log value (dW/dlog Mw), the shape of the molecular weight distribution curve is bimodal;
(a3) in the graph of molecular weight distribution curve, the area ratio of the region with log Mw ≥ 6.0 to the total area of the molecular weight distribution curve is 2 to 8%, and the area ratio of the region with log Mw ≤ 3.5 is 8 to 15%.

Meanwhile, in the present disclosure, when a molecular weight distribution curve wherein the x axis is a log value (log Mw) of weight average molecular weight(Mw), and the y axis is molecular weight distribution to the log value (dw/dlog Mw) is plotted through gel permeation chromatograph(GPC) analysis of the polyethylene resin composition, one wherein log Mw ≥ 6.0, i.e., weight average molecular weight(Mw) is 10^{6.0} g/mol or more, is defined as 'high molecular weight polymer' or 'high molecule, one wherein log M ≤ 3.5, i.e., molecular weight(M) is less than 10^{3.5} g/mol, is defined as 'low molecular weight polymer' or 'small molecule', and one wherein 3.5 < log M < 6.0, i.e., weight average molecular weight(Mw) is greater than 10^{3.5} g/mol and less than 10^{6.0} g/mol, is defined as 'middle molecular weight polymer' or 'middle molecule'.

In the present disclosure, when a polyethylene resin composition is prepared by a multimodal slurry polymerization process using plural reactors, by using a Ziegler-Natta catalyst favorable for the formation of broad molecular weight distribution, and adding different alpha olefin comonomers in the controlled amounts in each polymerization reaction step to control small molecule content distribution, the prepared polyethylene resin composition may comprise a copolymer of ethylene and two or more kinds of C4 to C10 alpha olefin comonomers, and satisfy all the property requirements of (a1) to (a3), and thus, exhibit improved stretchability and process stability as well as excellent haze property.

Specifically, since two or more kinds of alpha olefin comonomers such as butene, octene, and the like are copolymerized, and the content of low molecular weight polymer, namely small molecule content is high in the prepared copolymer, it is easy to form a fine fiber structure by stretching. Further, it has broad molecular weight distribution, and thus, may exhibit excellent stretchability.

Further, a polymer tail is formed in the molecular weight distribution curve in GPC analysis of the polyethylene resin composition. It means the existence of high molecular weight polymer, and due to the existence of high molecular weight polymer in the above-described content range, the composition has high melting temperature (Tm). As the result, it has broad processing window (Tm-Tc), and may exhibit excellent process stability.

Thus, the polyethylene resin composition according to the present disclosure is useful for a stretched film, particularly for a stretched film for food packaging.

Specifically, in the polyethylene resin composition according to the present disclosure, the copolymer is a copolymer of ethylene and two or more kinds of C4 to C10 alpha olefin comonomers.

The alpha olefin monomer may be specifically 1-butene, 1-pentene, 4-methyl-1-pentene, 1-hexene, 1-heptene, 1-octene, 1-decene, 1-undecene, 1-dodecene, 1-tetradecene, 1-hexadecene, or 1-eicosene, and the like.

Further, the copolymer may comprise structural units derived from the comonomers in the content of 50 to 60 wt%, based on the total weight of the copolymer.

As such, since two or more kinds of comonomers are used, and structural units derived from the comonomers are included in a high content compared to the past, when progressing biaxial stretching in TD after MD stretching of a film, the content of small molecule and crystal participating in the formation of micro fibril is high, which is favorable for stretching, and excellent biaxial stretching property compared to the existing polyethylene resin composition may be exhibited.

More specifically, the copolymer may be a terpolymer of ethylene/1-butene/1-octene, and even more specifically, a terpolymer of ethylene/1-butene/1-octene comprising structural units derived from 1-butene and 1-octene in the content of 50 to 60 wt%, based on the total weight of the copolymer.

Further, the polyethylene resin composition according to the present disclosure exhibits a bimodal molecular weight distribution curve in GPC analysis. Such a bimodal molecular weight distribution means that a structure with improved properties may be secured through the control of distribution (or content) of low molecular weight polymer and high molecular weight polymer in the polyethylene resin composition, and particularly, compared to a polyethylene resin composition exhibiting unimodal molecular weight distribution, a molecular structure in favor of biaxial stretching may be reinforced through the selective increase in small molecule distribution and high molecule distribution.

Further, in the graph of the molecular weight distribution curve of the polyethylene resin composition, the area ratio of the region wherein log Mw ≥ 6.0 is 2 to 8% of the total area of the molecular weight distribution curve. In case the area ratio of the region wherein log Mw ≥ 6.0 is less than 2%, the content of high molecular weight polymer may be too low, and thus, Tm and Tc decrease, and process stability may be deteriorated. Further, in case the area ratio of the region wherein log Mw ≥ 6.0 is greater than 8%, due to too high content of high molecular weight polymer, a density may increase, and thus, transparency and stretchability of the film may be deteriorated.

More specifically, in the graph of the molecular weight distribution curve of the polyethylene resin composition, the area ratio of the region wherein Log Mw ≥ 6.0 may be 2% or more, or 2.3% or more, or 2.5% or more, and 8% or less, or 7% or less, or 5% or less, or 4% or less, or 3.5% or less, or 3.1% or less of the total area of the molecular weight distribution curve.

Further, in the polyethylene resin composition, the area ratio of the region wherein log Mw ≤ 3.5 is 8 to 15% of the total area of the molecular weight distribution curve. In case the area ratio of the region wherein log Mw ≤ 3.5 is less than 8%, due to too low content of low molecular weight polymer, it may not be easy to form fibril during stretching, and due to narrow molecular weight distribution, stretchability may be significantly deteriorated. Further, in case the area ratio of the region wherein log Mw ≤ 3.5 is greater than 15%, due to too high content of low molecular weight polymer, a density may excessively decrease, and thus, thermal property and mechanical property of a film may be deteriorated.

More specifically, in the graph of the molecular weight distribution curve of the polyethylene resin composition, the area ratio of the region wherein log Mw ≤ 3.5 may be 8% or more, or 8.2% or more, or 8.3% or more, or 8.6% or more, or 9% or more, and 15% or less, or 12% or less, or 10% or less, or 9.5% or less.

The contents of high molecular weight and low molecular weight polymers may be respectively calculated from the area ratio, i.e., fraction (%) of the region wherein log Mw ≤ 6.0 and the region wherein log Mw ≤ 3.5, based on the total area of the molecular weight distribution curve, in the graph of the molecular weight distribution curve obtained through GPC analysis.

Meanwhile, in the present disclosure, specific measurement method and conditions of GPC analysis of the polyethylene resin composition will be explained in Experimental Examples later.

Further, the polyethylene resin composition has a processing window (or processing temperature range), defined as a difference (Tm-Tc) between a melting temperature (Tm) and a crystallization temperature (Tc), of 15°C or more.

The processing window means a processable temperature range when preparing a film using the polyethylene resin composition, and as the processing window is wider, more excellent processability is exhibited. Since the polyethylene resin composition according to the present disclosure has high processing window of 15°C or more, it exhibits excellent processability at wide temperature range.

More specifically, the processing window of the polyethylene resin composition is 15°C or more, or 16°C or 17°C or more. As the processing window is higher, processability is more excellent, and the upper limit is not specifically limited, but it may be 30°C or less, or 25°C or less, or 20°C or less, considering limitation on the preparation process, and the like.

Along with the above-described property requirements, the polyethylene resin composition has high density of 0.940 to 0.960 g/cm³. Thus, it may exhibit excellent strength. More specifically, the density of the polyethylene resin composition may be 0.940 g/cm³ or more, 0.945 g/cm³ or more, or 0.947 g/cm³ or more, and 0.960 g/cm³ or less, or 0.955 g/cm³ or less, or 0.950 g/cm³ or less.

Meanwhile, the density of the polyethylene resin composition is a value measured at 23°C according to ISO 1183-2 method.

In addition to the above-described property requirements, the polyethylene composition according to the present disclosure may further satisfy one or more properties of the following (b1) to (b6).
(b1) melt index (MI_{2.16}) (measured at 190°C under load of 2.16 kg according to ISO 1133 method): 0.8 to 2.0 g/10 min
(b2) weight average molecular weight (Mw): 110,000 to 150,000 g/mol
(b3) number average molecular weight (Mn): 9,000 to 13,000 g/mol
(b4) molecular weight distribution [Mw/Mn]: 10 to 20
(b5) melting temperature (Tm): 130 to 135°C
(b6) crystallization temperature (Tc): 110 to 120°C

Specifically, the polyethylene resin composition may have melt index (MI_{2.16}) measured at 190°C under load of 2.16 kg according to ISO 1133 method of 0.8 g/10min or more and 2.0 g/10min or less. More specifically, the melt index (MI_{2.16}) may be 0.8 g/10min or more, or 1.0 g/10min or more, or 1.1 g/10min or more, and 2.0g/10min or less, or 1.5 g/10min or less, or 1.3 g/10min or less.

Further, the polyethylene resin composition may have weight average molecular weight (Mw) of 110,000 g/mol or more, and 130,000 g/mol or less. More specifically, it may have weight average molecular weight of 110,000 g/mol or more, or 115,000 g/mol or more, or 117,000 g/mol or more, and 130,000 g/mol or less, or 127,000 g/mol or less, or 125,000 g/mol or less.

Further, the polyethylene resin composition may have number average molecular weight (Mn) of 9,000 g/mol or more and 13,000 g/mol or less. More specifically, it may have number average molecular weight of 9,000 g/mol or more, or 9,500 g/mol or more, and 13,000 g/mol or less, or 12,500 g/mol or less.

Further, the polyethylene resin composition may have molecular weight distribution or polydispersity index [Mw/Mn] of 10 or more and 20 or less. More specifically, it may be 10 or more, or 10.2 or more, or 10.5 or more, and 20 or less, or 15or less, or 13 or less, or 12.5 or less.

Meanwhile, in the present disclosure, the weight average molecular weight (Mw) and number average molecular weight (Mn) of the polyethylene resin composition may be measured through gel permeation chromatography (GPC), and each of them is conversion value to standard polystyrene. Further, the polydispersity index of the polyethylene resin composition may be calculated by dividing the above measured weight average molecular weight (Mw) by number average molecular weight (Mn). The specific measurement method and conditions will be explained in Experimental Examples later.

The above-described high processing window results from high Tm due to high content of high molecule. Specifically, Tm of the polyethylene resin composition is 130 to 135°C. More specifically, it is 130°C or more, or 131°C or more, and 135°C or less, or 133°C or less, or 132°C or less.

Further, the polyethylene resin composition has a crystallization temperature (Tc) of 110 to 120°C. More specifically, the crystallization temperature may be 110°C or more, or 115°C or more, and 120°C or less, or 118°C or less, or 116°C or less.

By satisfying all the above-described property requirements, the polyethylene resin composition according to the present disclosure exhibits excellent stretchability and properties. Thus, there is no concern about occurrence of defect such as shrink, break, and the like, during TD stretching when preparing a biaxially stretched film, and the prepared biaxially stretched film may exhibit excellent stretching ratio and tensile strength.

Meanwhile, the polyethylene resin composition according to the present disclosure may be prepared by a preparation method by slurry polymerization using plural reactors.

Specifically, the polyethylene resin composition may be prepared by a preparation method comprising steps of:
subjecting ethylene and first comonomers of C4 to C10 alpha-olefin to a first slurry polymerization reaction while adding hydrogen in the presence of a Ziegler-Natta catalyst in a first reactor, to prepare first polyethylene; and
transferring the first polyethylene to a second reactor connected with the first reactor, and then, adding ethylene and second comonomers of C4 to C10 alpha-olefin and subjecting them to a second slurry polymerization reaction in the presence of a Ziegler-Natta catalyst,
wherein the first comonomers and the second comonomers are different from each other, and
the total amount of alpha-olefin comonomers added including the first comonomers and second comonomers is 0.005 to 5 wt%, based on the total weight of the monomers comprising ethylene, first comonomer and second comonomers.

The preparation method of a polyethylene resin composition according to the present disclosure is conducted by slurry polymerization using plural reactors, and thus, two or more reactors, for example, two or more continuous stirred tank reactors (CSTR) may be used.

Specifically, in the preparation method, a first reactor where a first slurry polymerization reaction for the preparation of the first polyethylene occurs, and a second reactor connected with the first reactor, where additional polymerization reactions of the first polyethylene transferred from the first reactor and monomers added in the second reactor occur, may be used.

Further, the polymerization processes in the first and second reactors are conduced by a slurry polymerization.

In solution polymerization, a catalyst is activated by a high temperature high pressure reaction, and thus, prepared resin composition exhibits deteriorated stretchability due to narrow molecular weight distribution (MWD) and low content of high molecular weight tail. However, in the slurry polymerization process of the present disclosure, polymerization is progressed at relatively low temperature, and thus, it is possible to secure a molecular structure having wide MWD and containing a large quantity of high molecular weight tail, which is required for a polyethylene resin composition for manufacturing a transparent film. Thus, excellent biaxial stretching property may be exhibited, and small molecule and crystal distribution can be selectively improved through securing of comonomers, and thus, high transparency may be realized.

Further, in the preparation method according to the present disclosure, the first comonomers and the second comonomers are different from each other.

The first and second comonomers are different from each other, and may be C4 to C10 alpha-olefin. The alpha-olefin monomers are as defined above.

The total amount of alpha-olefin comonomers added including the first comonomers and second comonomers is 0.005 to 5 wt%, based on the total weight of monomers comprising ethylene, first comonomers and second comonomers.

If the total amount of the comonomers added is less than 0.005 wt% based on the total weight of the monomers, the content of low molecular weight structure in the finally prepared copolymer may be low, and thus, it may be difficult to realize sufficient effect. If it is greater than 5 wt%, due to process unstable factors such as fouling, it may not be preferable for the preparation by a slurry process, and it may be difficult to realize a density of 0.940 g/cm³ or more. Further, the prepared polyethylene resin composition may have low content of high molecule and high crystal, and thus, MD stretching ratio may decrease, and there is a concern about deterioration of the mechanical properties of a film. More specifically, the total amount of comonomers added including the first comonomers and second comonomers may be 0.005wt% or more, or 0.05wt% or more, or 0.5wt% or more, or 1wt% or more, or 3wt% or more, or 3.1wt% or more, and 5wt% or less, or 4wt% or less, or 3.7wt% or less, or 3.5wt% or less, based on the total weight of the monomers comprising ethylene, first comonomers and second comonomers.

Further, in the preparation method according to the present disclosure, the amount of the first comonomers added in the first slurry polymerization reactor is set higher than the amount of the second comonomers added in the second slurry polymerization reactor.

In this case, along with a bimodal molecular weight distribution, a molecular weight distribution structure having high content of SCB derived from comonomers in the low molecular weight region may be realized. As such, since SCB content in the low molecular weight region is high, mobility of tie molecule between crystals may increase, and thus. the formation of fibril is inhibited during a stretching process, which may be more favorable for TD stretching.

Specifically, the weight ratio of the second comonomers added during the second slurry polymerization process to the first comonomers added during the first slurry polymerization (=the weight of the second comonomers added during the second slurry polymerization reaction/the weight of the first comonomers added during the first polymerization process) may be 0.05 to 0.5. More specifically, the weight ratio of the second comonomers/first comonomers may be 0.05 or more, or 0.07 or more, or 0.09 or more, and 0.5 or less, or 0.3 or less, or 0.2 or less, or 0.195 or less.

Further, in the preparation method according to the present disclosure, the Ziegler-Natta catalysts used in the first slurry polymerization reaction and the second slurry polymerization reaction may be the same of different. In case the same Ziegler-Natta catalysts are used in the first and second slurry polymerization reactions, it may be easier to control the properties of the prepared polyethylene resin composition and realize the above-described property requirements.

Further, in the preparation method according to the present disclosure, the polymerization temperature (T1) and pressure (P1) in the first slurry polymerization reaction are higher than the polymerization temperature (T2) and pressure (P2) in the second slurry polymerization reaction. Along with control of the amount of the comonomers added, by setting temperature and pressure conditions in the first slurry polymerization reaction higher, it may be easier to realize bimodal molecular weight distribution of the polyethylene resin composition and combined properties of the polyethylene resin composition as explained above.

Specifically, a difference (T1-T2) between the polymerization temperature (T1) in the first slurry polymerization reaction and the polymerization temperature (T2) in the second slurry polymerization reaction may be 3°C or more, or 4°C or more, or 4.5°C or more, or 5°C or more, and 6°C or less, or 5.8°C or less, or 5.5°C or less.

Further, a difference (P1-P2) between the pressure (P1) in the first slurry polymerization reaction and the pressure (P2) in the second slurry polymerization reaction may be 3 bar or more, or 3.5 bar or more, or 4 bar or more, and 6 bar or less, or 5.5 bar or less, or 5 bar or less.

Further, simultaneously with satisfying the above-described temperature difference and pressure difference, in the preparation method according to the present disclosure, the polymerization temperature (T1) in the first slurry polymerization reaction may be 70 to 90°C, and the polymerization temperature (T2) in the second slurry polymerization reaction may be 70 to 90°C.

Further, the pressure (P1) in the first slurry polymerization reaction may be 5 to 10 bar, and the pressure (P2) in the second slurry polymerization reaction may be 1 to 5 bar.

Hereinafter, each step will be explained in detail.

In the preparation method of a polyethylene resin composition according to the present disclosure, the step 1 is a step of subjecting ethylene and first comonomers of C4 to C10 alpha-olefin to a first slurry polymerization reaction while adding hydrogen in the presence of a Ziegler-Natta catalyst in a first reactor, to prepare first polyethylene.

The Ziegler-Natta catalyst used for the preparation of the first polyethylene may be specifically a magnesium-supported titanium catalyst. Further, the magnesium-supported titanium catalyst may further comprise halogenated hydrocarbon.

Specifically, the magnesium-supported titanium catalyst comprises a solid magnesium carrier. As examples of the magnesium carrier, magnesium, magnesium oxide, magnesium chloride, or silica-magnesia, and the like may be mentioned, and one or mixtures of two or more kinds of them may be used. Among them, considering catalytic activity and easiness in realizing optimal property requirements, the magnesium carrier may be magnesium or magnesium chloride.

Meanwhile, the magnesium-supported titanium catalyst comprises a titanium-containing compound represented by the following Chemical Formula 1 as a main catalyst:

[Chemical Formula 1] Ti(OR¹)ₘX¹₄₋ₘ

In the Chemical Formula 1,
each R¹ is identical or different, and a C1 to 10 alkyl group,
X¹ is a halogen atom, more specifically Cl, Br or I,
m is an integer of 0 to 4.

In the Chemical Formula 1, R¹ may be specifically an alkyl group having a carbon number of 1 or more, or 2 or more, or 3 or more, and 10 or less, or 8 or less, or 5 or less.

Further, X¹ may be specifically Br or Cl, more specifically Cl.

As specific examples of the titanium-containing compound, titanium tetrachloride (TiCl₄) or chlorinated titanium dioxide may be mentioned, and one or mixtures of two or more kinds of them may be used.

Further, the catalyst comprising the titanium-containing compound may comprise Mg:Ti at a mole ratio of 1:1 to 10:1, or 2:1 to 7:1, or 4:1 to 5:1, based on the content of Mg in the magnesium carrier and the content of Ti in the titanium-containing compound. Within the above mole ratio range, more excellent catalytic activity may be exhibited.

Further, the shape of the catalyst is not specifically limited, but for example, it may be in the form of spherical fine particles.

Further, the average particle size of the catalyst may be 5 to 100µm, more specifically 5µm or more, or 8µm or more, and 100µm or less, or 50µm or less, or 20µm or less, or 13µm or less.

Meanwhile, in the present disclosure, the average particle size of the catalyst may be measured with scanning electron microscopy (SEM). Specifically, after obtaining SEM image where 100 or more catalyst particles are observed, a random straight line is plotted, and through the length of corresponding straight line and the number of particles included in the straight line, and magnification, the average size of catalyst particles may be calculated.

Further, the magnesium-supported titanium catalyst may further comprise halogenated hydrocarbon.

Halogenated hydrocarbon coordinates around titanium that serves as an active site to change the electrical property of titanium, and due to large volume of the halogenated hydrocarbon, a sufficient three-dimensional space is formed between titanium atoms, and thus, catalytic activity may be significantly improved during polyethylene polymerization.

The halogenated hydrocarbon may be specifically C1 to 12 alkane, C3 to 12 cycloalkane, C2 to 12 alkene, C2 to 12 alkyne, or C6 to 30 aromatic hydrocarbon, substituted with one or more halogen groups, and the halogen group may be fluoro, chloro, or bromo.

As specific examples, bromoform, tetrachloroethane, hexachloroethane, pentachloroethane, 1,1,2,2-tetrachloroethane, 1-bromo-1-chloroethane, 1,2-dibromoethane, 1,2-dichloroethane, bromoethane, hexachloropropane, 1,2,3-trichloropropane, 1,2-dichloropropane, 1-chloropropane, 2-chloropropane, chlorobutane, dichlorobutane, 1-chloro-2-methylpropane, n-butylchloride, tert-butylchloride, 1-chloro-3-methylbutane, 1-chloropentane, 1,5-dichloropentane, bromopentane, neopentylchloride, 1-chloroheptane, cyclopropylbromide, cyclobutylchloride, cyclohexylchloride, cyclohexylbromide, vinylidenechloride, 1,2,3,3-tetrachloropropene, 1,2-dibromo-1-propene, 1,3-dichloropropene, hexachloro-1,3-butadiene, 2-bromo-2-butene, propargyl chloride, chlorobenzene, tetrachlorobenzene, trichlorobenzene, dichlorobenzene, 4-chlorobenzyl chloride, benzyl chloride, or 1,1-dichloro-2-phenyl cyclopropane, and the like may be mentioned, and one or mixtures of two or more kinds of them may be used.

The halogenated hydrocarbon may be included in the amount of 0.1 moles or more, or 0.12 moles or more, or 0.13 moles or more, 500 moles or less, or 100 moles or less, or 50 moles or less, or 10 moles or less, or 1 mole or less, or 0.5 moles or less, based on 1 mole of the main catalyst titanium-containing compound.

The Ziegler-Natta catalyst may be prepared by a preparation method comprising a step of treating a carrier wherein raw material of a magnesium carrier is mixed with alcohol and reacted; and a step of supporting a titanium-containing compound wherein the product obtained in the above step is reacted with a titanium-containing compound represented by the Chemical Formula 1, and further comprising, during the carrier treating step and titanium-containing compound supporting step, or after the titanium-containing compound supporting step, a step of contacting and reacting with halogenated hydrocarbon. Thus, the preparation method of a polyethylene resin composition according to the present disclosure comprises before the first step, steps for preparing a Ziegler-Natta catalyst, specifically the step of treating a carrier and the step of supporting a titanium-containing compound, and may further comprise during the carrier treating step and titanium-containing compound supporting step, or after the titanium-containing compound supporting step, a step of contacting and reacting with halogenated hydrocarbon.

Specifically, the carrier treating step for the preparation of a Ziegler-Natta catalyst may be conducted by mixing raw material of a magnesium carrier with alcohol and reacting them in the presence of a non-polar solvent.

As specific examples of the alcohol, methanol, ethanol, 1-propanol, isopropanol, n-butanol, isobutanol, 1-pentanol, isopentaol, n-hexnaol, 1-octanol, 2-ethyl-1-hexanol, and the like may be mentioned, and one or mixtures of two or more kinds of them may be used. Among them, ethanol or 2-ethyl-1-hexnaol may be used.

The alcohol may be used in the amount of 1 mole or more, or 1.5 moles or more, or 2 moles or more, and 10 moles or less, or 8 moles or less, or 6 moles or less, based on 1 mole of the raw material of the magnesium carrier.

Meanwhile, as the raw material of the magnesium carrier, magnesium carrier itself such as magnesium, magnesium oxide, magnesium chloride, or silica-magnesia, and the like; or magnesium alcoholate such as magnesium ethylate, and the like may be mentioned, and one or mixtures of two or more kinds of them may be used. For example, in case magnesium alcoholate is used as the raw material of the magnesium carrier, it is converted into magnesium chloride by titanium tetrachloride (TiCl₄) added as a main catalyst, and thus, is included as a carrier in the finally prepared catalyst.

The mixing of the raw material of the magnesium carrier and alcohol may be specifically conducted by adding the alcohol to a slurry prepared by mixing a non-polar solvent such as hexane with the raw material of the magnesium carrier, or adding to the slurry a solution prepared by dissolving the alcohol in a non-polar solvent, and then, stirring until a transparent solution is formed at a temperature of 20 to 150°C. As the result of the mixing, a homogeneous solution of the magnesium carrier is obtained, and in the solution, an adduct wherein crystals of the magnesium carrier are surrounded by the alcohol molecules is formed.

Next, the titanium-containing compound supporting step for the preparation of the Ziegler-Natta catalyst is conducted by reacting the reaction product of the magnesium carrier and alcohol, produced in the carrier treating step, with the titanium-containing compound.

Specifically, this step may be conducted by directly adding the titanium-containing compound to the reaction product of the magnesium carrier and alcohol, produced in the carrier treating step, or adding thereto a solution prepared by dissolving the titanium compound in a non-polar solvent, and reacting them at -50 to 120°C, or -20 to 80°C.

The kind and content of the titanium-containing compound are as explained above.

Further, when adding the titanium-containing compound, the reaction product of the magnesium carrier and alcohol, produced in the carrier treating step, may be stirred at 10 to 500rpm, or 50 to 400rpm.

Meanwhile, when preparing the Ziegler-Natta catalyst, halogenated hydrocarbon may be added when adding alcohol to the magnesium carrier in the carrier treating step; or the halogenated hydrocarbon may be added when adding the titanium-containing compound in the titanium-containing compound supporting step; or the halogenated hydrocarbon may be added after completing the titanium-containing compound supporting step, and reacted.

The kind and content of the halogenated hydrocarbon are as explained above.

The Ziegler-Natta catalyst prepared by the preparation method may be used as it is, or slurried in a non-polar solvent and used for polyethylene polymerization.

Further, the Ziegler-Natta catalyst may be used together with an organometal compound represented by the following Chemical Formula 2 as a cocatalyst.

[Chemical Formula 2] R²ₙMX²₍₃₋ₙ₎

In the Chemical Formula 2,
M is selected from the group consisting of elements of Groups IB, IIA, IIIB and IVB in the periodic table,
each R² is identical or different, and a C1 to 10 alkyl group,
X² is halogen, and
n is an integer of 1 to 3.

In the Chemical Formula 2, M is specifically aluminum, R² is C1 to 5, or C2 to 4 alkyl group, and X² is Cl or Br.

As specific examples of the organometal compound represented by the Chemical Formula 2, triethylaluminum, methylaluminum dichloride, methylaluminum dibromide, dimethylaluminum chloride, dimethylaluminum bromide, propylaluminum dichloride, propylaluminum dibromide, butylaluminum dichloride, butylaluminum dibromide, dibutylaluminum chloride, dibutylaluminum bromide, isobutylaluminum dichloride, isobutylaluminum dibromide, diisobutylaluminum chloride, diisobutyl aluminum bromide, hexylaluminum dichloride, hexylaluminum dibromide, dihexylaluminum chloride, dihexylaluminum bromide, octylaluminum dichloride, octylaluminum dibromide, dioctylaluminum chloride, dioctylaluminum bromide, and the like may be mentioned, and one or mixtures of two or more kinds of them may be used.

Meanwhile, since the cocatalyst has an influence on the polymerization activity of the magnesium-supported catalyst, polymerization activity of the catalyst may be further increased through the control of the cocatalyst content. For example, the organometal compound represented by the Chemical Formula 2 may be used in such an amount that the amount of aluminum may be 3 moles or more, or 10 moles or more, or 25 moles or more, and 200 moles or less, or 100 moles or less, based on 1 mole of titanium in the catalyst.

The cocatalyst may be mixed with the Ziegler-Natta catalyst and then added to a polyethylene polymerization reaction, or it may be separately added before or after the addition of the Ziegler-Natta catalyst. Thus, the preparation method of a polyethylene resin composition according to the present disclosure may further comprise a process of adding the cocatalyst, when preparing the first polyethylene in the step 1.

Meanwhile, the polymerization reaction in the step 1 is a copolymerization reaction of ethylene and first comonomers of C4 to C10 alpha-olefin, and considering the properties of the first polyethylene and the properties of the final polyethylene resin composition to be realized, the amount of monomers added may be determined. For example, in the present disclosure, the first comonomers of C4 to C10 alpha-olefin may be added in the amount of 0.01 to 5 wt%, based on the total weight of the ethylene. When added in the above content range, due to increase in small molecule and crystal content ratio, TD stretching ratio may be increased.

Further, the polymerization reaction in the first step is conducted while adding hydrogen gas.

Since the amount of hydrogen gas added has an influence on the properties of prepared copolymer, the added amount is appropriately determined according to the properties to be realized. For example, in the present disclosure, based on the total weight of monomers comprising ethylene and alpha-olefin comonomers added in the first and second reactors, the amount of hydrogen gas added may be 0.001 to 0.5 wt%. When hydrogen gas is added in the above range, combined properties of the polyethylene resin composition as explained above may be easily realized. More specifically, it may be added in the amount of 0.001 wt% or more, or 0.01 wt% or more, or 0.05 wt% or more, or 0.07wt% or more, and 0.5 wt% or less, or 0.3wt% or less, or 0.1wt% or less.

Further, the polymerization reaction temperature and pressure conditions in the first step are as defined above.

By the polymerization reaction under the above-described preparation conditions, the first polyethylene is prepared.

Next, the step 2 is progressed in a second reactor connected with the first reactor.

Specifically, the first polyethylene prepared in the step 1 is transferred to the second reactor connected with the first reactor, and then, ethylene and the second comonomers of C4 to C10 alpha-olefin are added, and a second slurry polymerization reaction is conducted in the presence of a Ziegler-Natta catalyst.

In the second reactor, additional polymerization reaction of the first polyethylene transferred from the first reactor, and ethylene and the second comonomers of C4 to C10 alpha-olefin added in the second reactor, occurs.

The Ziegler-Natta catalyst used in the second slurry polymerization reaction is as explained in the step 1. Thus, the Ziegler-Natta catalysts used in the first and second slurry polymerization reactions may be identical of different. In case identical Ziegler-Natta catalysts are used in the first and second slurry polymerization reactions, it may be easier to control the properties of prepared polyethylene resin composition and realize the property requirements.

Further, the second slurry polymerization reaction may be conducted with or without adding hydrogen. For example, in case hydrogen gas is added, based on the total weight of monomers including ethylene and second comonomers of C4 to C10 alpha-olefin added in the second reactor, hydrogen gas may be added in the amount of 0.001 to 0.05 wt%.

Further, the polymerization reaction temperature and pressure conditions in the step 2 are as defined above.

Meanwhile, the preparation method according to the present disclosure may further comprise a step of melting and extruding the obtained polymerization product, after completing the polymerization reaction in the step 2.

Through the melting and extrusion processes, a pellet-type polyethylene resin composition may be prepared.

Since the polymerization product is obtained as powders after the polymerization reaction in the step 2, the kind of antioxidant that can be used is limited, and since the content deviation of antioxidant is large according to powders, property deviation in the product prepared using the same is large. However, in case melting and extrusion processes are conducted, constructional components including antioxidant are uniformly mixed, and thus, the prepared product may have uniform properties.

Meanwhile, in the present disclosure, the term 'pellet' or 'pellet-type' is a small particle or piece formed by the extrusion of raw material, and includes all the shapes classified as a pellet in corresponding technical field, including circular, flat, squamous, polygonal, rod shapes, and the like. Further, the size of a pellet is appropriately determined according to use and shape, and is not specifically limited, but a pellet in the present disclosure is defined as one having an average diameter of 2mm or more so that it can be distinguished from powder having small average diameter of 1 mm level. Wherein the "diameter" is the longest distance among any straight-line distances on the outer circumference surface of the pellet, and it may be measured using an imaging microscope.

The melt extrusion process may be conducted using a common extruder, and specific method and conditions are not specifically limited so long as morphological conditions of a pellet are satisfied.

Further, during the melt extrusion, within a range where the properties of the polyethylene resin composition are not deteriorated, one or more kinds of additives such as an antioxidant, a neutralizing agent, a slip agent, an anti-blocking agent, a UV stabilizer, an antistatic agent, and the like may be further added.

For example, as the antioxidant, a phenol-based antioxidant; a phosphorus-based antioxidant; an amine-based antioxidant, and the like may be mentioned, and one or mixtures of two or more kinds of them may be used. As specific examples of the antioxidant, a phenol-based antioxidant such as pentaerythritol tetrakis[3-(3,5-di-tert-butyl-4-hydroxyphenyl)propionate], or 1,3,5-trimethyl-2,4,6-tris(3,5-di-tert-butyl-4-hydroxybenzyl)benzene, and the like; a phosphorus-based antioxidant such as tris(2,4-di-tert-butylpneyl)phospite(tris(2,4-di-tert.-butylphenyl)phosphite), bis(2,4-di-tert-butylphenyl) pentaerythritol diphosphite, and bis(2,4-dicumylphenyl)pentaerythritol diphosphite, and the like; or an amine-based antioxidant such as phenylnaphthylamine, 4,4'-(α,α-dimethylbenyl)diphenylamine, and N,N'-di-2-naphthyl-p-phenylenediamine, and the like may be mentioned, and one or mixtures of two or more kinds of them may be used. Further, commercially available Irganox^{™} 1010 (manufactured by BASF company), Irganox^{™} 3114 (manufactured by BASF company), Irganox^{™} 1076 (manufactured by BASF company), Irgafos^{™} 168 (manufactured by BASF company), Irgafos^{™} 626 (manufactured by BASF company) or Cyanox^{™} 1790 (manufactured by CYTEC company), and the like may be used. Among them, considering film property improvement effect, the polyethylene resin composition may comprise a mixture of a phenol-based first antioxidant and a phosphorus-based second antioxidant. Wherein, the phenol-based first antioxidant may be included in the content of 50 ppm or more, or 200ppm or more, or 250ppm or more, and 500 ppm or less, or 300 ppm or less, and the phosphorus-based second antioxidant may be included in the content of 100 ppm or more, or 300ppm or more, or 500ppm or more, and 1000 ppm or less, or 700 ppm or less, based on the total weight of the polyethylene resin composition.

Further, as the neutralizing agent, calcium stearate (Ca-St), calcium palmitate, zinc stearate, zinc palmitate, or hydrotalcite (magnesium aluminum hydroxy carbonate), and the like may be mentioned, and one or mixtures of two or more kinds of them may be used. Further, commercially available DHT-4A (manufactured by KYOWA company), and the like may be used. The neutralizing agent may be included in the content of 100ppm or more, or 300ppm or more, or 500ppm or more, and 1000 ppm or less, or 700 ppm or less, based on the total weight of the polyethylene resin composition.

Further, the melt extrusion process may be conducted according to common methods. For example, it may be conducted at an extrusion temperature of 180 to 220°C, or 180 to 210°C, using an extruder such as twin-screw extruder.

By the preparation method, a polyethylene resin composition satisfying the above-explained property requirements is prepared. As the result, the polyethylene resin composition exhibits excellent stretchability and properties, and when preparing a biaxially stretched film, there is no concern about occurrence of defects such as shrink during TD stretching, and the prepared biaxially stretched film may exhibit excellent stretching ratio and has property.

Thus, according to the present disclosure, there is provided a stretched film, specifically a biaxially stretched film, prepared using the polyethylene resin composition.

Since the stretched film comprises the above-described polyethylene resin composition, it exhibits excellent stretchability and strength property. Specifically, the stretched film according to the present disclosure may have MD (machine direction) stretching ratio of 5 to 6, and TD (transverse direction) stretching ratio of 6 to 9, or 8 to 9.

Further, the stretched film, when stretched at a stretching ratio of 5X8 (MD×TD) and has a thickness of 20µm, has a haze value measured according to ISO 13468 of 20% or less, or 17% or less, or 14% or less.

Hereinafter, preferable examples will be presented to assist in understanding of the invention. However, the following examples are provided only for better understanding of the invention, and the scope of the invention is not limited thereby.

### <Preparation of catalyst>

### Preparation Example

To a 2 liter Buchi reactor dried with nitrogen, 34g of anhydrous magnesium chloride (99 wt% or more, moisture content less than 1%) was added, and 600 ml of purified hexane having a moisture content less than 0.5ppm was added to the reactor. To the resulting reaction product, 175 ml of anhydrous 2-ethyl-1-hexanol was added with stirring, and the solution was stirred at a temperature of 130°C for about 2 hours to prepare a homogeneous solution of a magnesium carrier.

While stirring the homogeneous solution at a temperature of 35°C at a speed of 200 rpm, 200 ml of TiCl₄ was slowly added over 1 hour, and the solution was further stirred for 1 hour. During this process, solid materials were produced. After the solid materials were precipitated, a liquid part was removed, and the separated solid materials were washed with hexane several times until a titanium concentration of the washed solution became 0.5 mmol or less. To the washed solid materials, purified hexane was added such that the total volume became 1 liter. In in the obtained hexane slurry, the concentration of titanium was 30mM. To the hexane slurry, 7 ml of cyclohexylchloride was added at a temperature of 40°C and stirred for 1 hour to obtain a magnesium-supported Ziegler-Natta catalyst.

The prepared Ziegler-Natta catalyst comprised TiCl₄ as a main catalyst, and comprised cyclohexylchloride at a mole ratio of 0.13, based on 1 mole of the main catalyst. Further, the mole ratio of Mg:Ti in the Ziegler-Natta catalyst was 4:1, and the average particle size of the Ziegler-Natta catalyst was 8 µm.

### <Preparation of polyethylene resin composition>

### Example 1

Using a bimodal slurry process using two 100L continuous stirred tank reactors (CSTR), a high-density polyethylene resin composition was prepared by progressing a polymerization reaction in the presence of Ziegler-Natta catalyst system to prepare polyethylene.

Specifically, in the first reactor, a primary polymerization reaction was conducted in the presence of ethylene, Ziegler-Natta catalyst prepared in the Preparation Example, hydrogen, and first comonomers of the conditions described in the following Table 1, to prepare first polyethylene (first powders). Wherein, as a cocatalyst, 0.2mM of TEAL was used at 85ml/hr.

After the first polyethylene polymerized in the first reactor was transferred to a second reactor connected in series, a secondary polymerization reaction was conducted in the presence of ethylene, Ziegler-Natta catalyst prepared in the Preparation Example, hydrogen, and second comonomers of the conditions described in the following Table 2.

Based on the total weight of the polymerization product (second powders) obtained as the result of the secondary polymerization reaction, 250 ppm of IRGANOX 1010 (BASF Corporation) as a first antioxidant, 500 ppm of Irgafos 168 (BASF Corporation) as a second antioxidant, and 500 ppm of calcium stearate (Ca-St) as a neutralizing agent were added and mixed, and then, extruded at an extrusion temperature of 190°C using a twin screw extruder (manufactured by TEK 30 MHS, SMPLATECH CO., diameter 32 pie, L/D=40) to prepare a pellet type polyethylene resin composition.

### Examples 2 to 4, and Comparative Examples 1 to 11

Polyethylene resin compositions were prepared by the same method as Example 1, except that the conditions were changed as described in the following Table 1 and Table 2.

### Comparative Example 12

A polyethylene resin composition was prepared by the same method as Example 1, except that a solution polymerization reactor including two reactors connected in series was used in stead of CSTR.

### Comparative Example 13

A polyethylene resin composition was prepared by the same method as Example 1, except that the conditions were changed as described in the following Table 2.

**[Table 1]**

| | | Example | | | |
|---|---|---|---|---|---|
| | | 1 | 2 | 3 | 4 |
| First reactor | Ethylene [kg/hr] | 8.0 | 8.0 | 8.0 | 8.0 |
| | Catalyst [ml/hr] | 75 | 75 | 75 | 75 |
| | 1-butene (first comonomers) [ml/min] | 12 | 12 | - | - |
| | 1-octene (first comonomers) [ml/min] | - | - | 12 | 12 |
| | Hydrogen [g/hr] | 8 | 8 | 8 | 8 |
| | Temperature [°C] | 80 | 80 | 80 | 80 |
| | Pressure [bar] | 6.4 | 6.6 | 6.5 | 6.4 |
| | First powder MI [g/10min] | 400 | 410 | 410 | 415 |
| Second reactor | Ethylene [kg/hr] | 8.0 | 8.0 | 8.0 | 8.0 |
| | Catalyst [ml/hr] | 15 | 15 | 15 | 15 |
| | 1-butene (second comonomers) [ml/min] | - | - | 1 | 2 |
| | 1-octene (second comonomers) [ml/min] | 1 | 2 | - | - |
| | Hydrogen [g/hr] | - | - | - | - |
| | Temperature [°C] | 75 | 75 | 75 | 75 |
| | Pressure [bar] | 2.2 | 2.0 | 2.0 | 2.1 |
| | Second powder MI [g/10min] | 1.2 | 1.4 | 1.2 | 1.4 |
| ratio of the weight of second comonomers to the weight of first comonomers | | 0.096 | 0.192 | 0.072 | 0.145 |
| total amount of comonomers added (wt%) | | 3.1 | 3.3 | 3.5 | 3.7 |

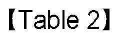

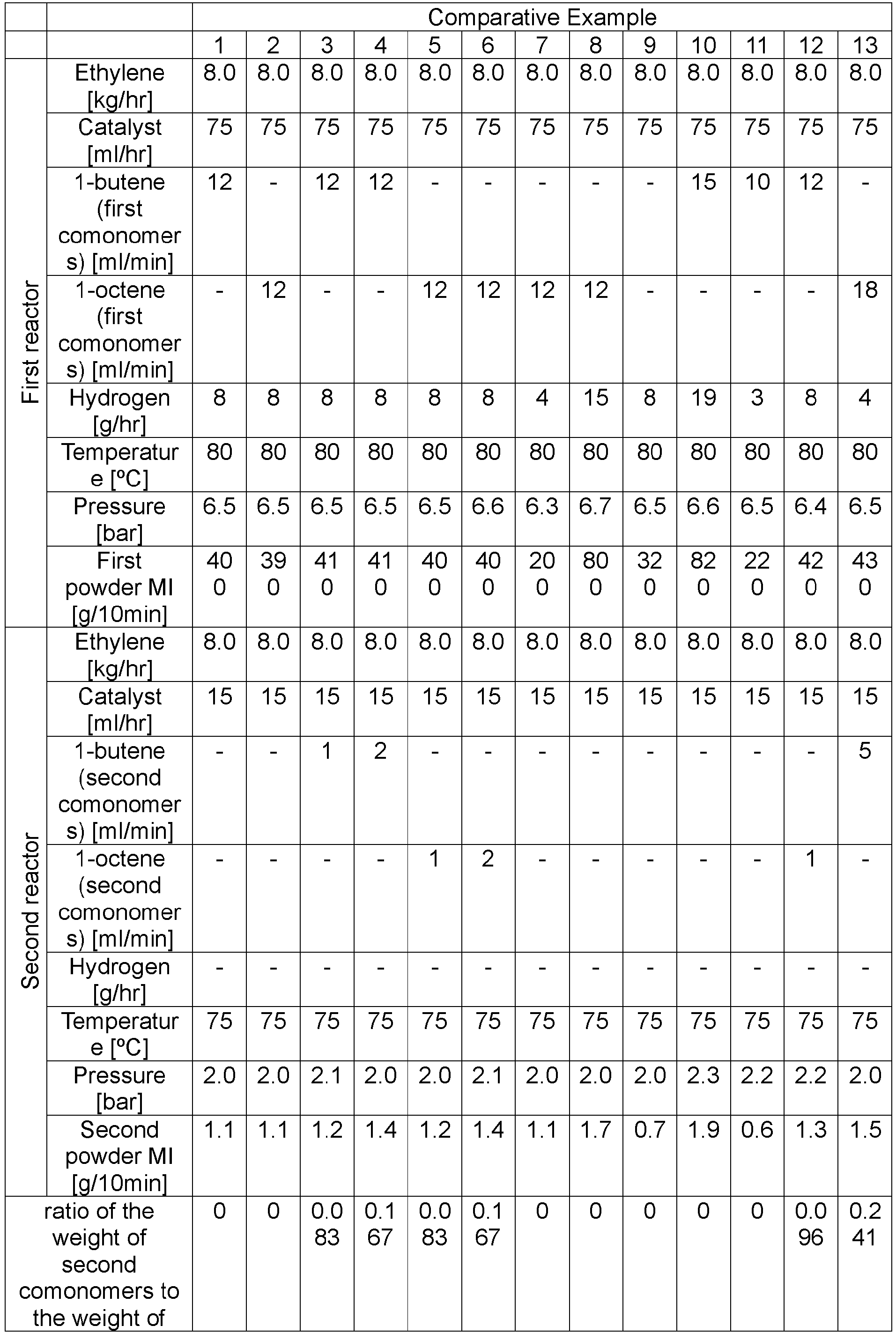

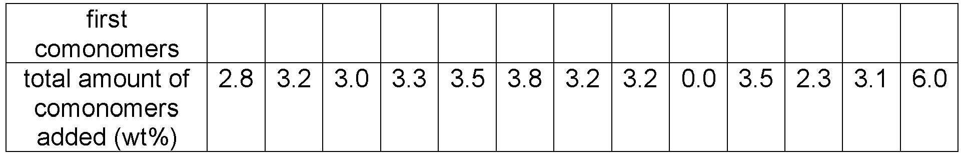

In the Table 1, MI values of the first and second powders were those measured according to ISO 1133 at 190°C under load of 2.16 kg for the polymerization products respectively obtained after completing the polymerization in the first reactor and second reactor.

Further, the total amount (wt%) of comonomers added was indicated as a percentage of the total weight of alpha olefin comonomers added including the first comonomers and second comonomers, based on the total weight of monomers including ethylene, first comonomers and second comonomers added in the first and second reactors.

### Experimental Example

For the polyethylene resin compositions prepared in Examples and Comparative Examples, the properties were measured as follows and the results were respectively shown in the following Tables 3 and 4.
(1) Density: measured at 23°C according to ISO 1183-2.
(2) Melt Index (MI_{2.16}): measured at 190°C under load of 2.16 kg according to ISO 1133.
(3) Molecular weight (Mw, Mn) and molecular weight distribution

Each polyethylene resin composition according to Examples and Comparative Examples was analyzed by gel permeation chromatography (GPC) to measure weight average molecular weight (Mw) and number average molecular weight (Mn), and the measured weight average molecular weight was divided by the number average molecular weight to obtain molecular weight distribution (MWD, Mw/Mn).

Specifically, the measurement sample was measured using Waters PL-GPC220 instrument using Polymer Laboratories PLgel MIX-B 300mm column. The measurement temperature was 160°C, 1,2,4-trichlorobenzene was used as a solvent, and the flow rate was 1mL/min. The polyethylene resin composition sample was pretreated by dissolving in 1,2,4-trichlorobenzene containing 0.0125% BHT at 160°C for 10 hours, prepared at the concentration of 10mg/10mL, and then, fed at an amount of 200µL, using GPC analysis instrument PL-GP220. Using a calibration curve formed using polystyrene standards, Mw and Mn values were measured. As the polystyrene standard, 9 kinds with molecular weight of 2,000 / 10,000 / 30,000 / 70,000 / 200,000 / 700,000 / 2,000,000 / 4,000,000 / 10,000,000 were used.

Through the GPC analysis, a log graph of the weight average molecular weight (Mw) of the polyethylene resin composition, namely a graph of molecular weight distribution curve wherein the x axis is the log value of the weight average molecular weight (log Mw), and the y axis is molecular weight distribution to the log value (dwt/dlog Mw) was obtained, and the shape of the molecular weight distribution curve was confirmed.

Further, from the percentage of the area ratio of the region wherein log Mw≥6.0 to the total area of the molecular weight distribution curve, the rate(%) of high molecule wherein log Mw≥6.0 was calculated, and from the percentage of the area ratio of the region wherein log Mw≤3.5 to the total are of the molecular weight distribution curve, the rate(%) of small molecule wherein log Mw≤3.5 was calculated. Wherein, the total area of the molecular weight distribution curve, the area of the region wherein log Mw≥6.0, and the area of the region wherein log Mw≤3.5 were calculated through the integration of corresponding region.

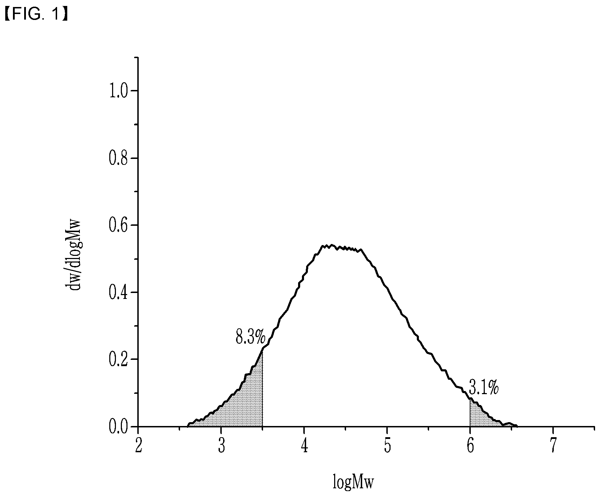

Further, a graph of the molecular weight distribution curve obtained from the result of gel permeation chromatography analysis of the polyethylene resin composition of Example 4 was shown in Fig. 1.

### (4) Melting temperature, crystallization temperature and processing window

Using a Differential Scanning Calorimeter (DSC, device name: DSC Q20, manufacturing company: TA instrument), the melting temperature (Tm) and crystallization temperature (Tc) of each polyethylene resin composition of Examples and Comparative Examples were measured, and a difference between the melting temperature and crystallization temperature was calculated and decided as a processing window (Tm-Tc).

Specifically, the temperature was increased to heat the polyethylene resin composition to 200°C at 10°C/min (Cycle 1), and then, it was subjected to isothermalization at 200 °C for 5 minutes, cooled to -50°C at 10°C/min, and then, subjected to isothermalization at -50°C for 5 minutes, and heated again to 200°C at 10°C/min (Cycle 2).

In the DSC curve obtained therethrough, the temperature of the highest point of the endothermic peak was measured as a melting temperature (Tm, °C), and the temperature of the highest point of the exothermic peak was measured as a crystallization temperature (Tc, °C). Wherein, the melting temperature (Tm) and crystallization temperature (Tc) were indicated as the results of measurement in the section where temperature secondly increased and decreased, respectively (Cycle 2).

### (5) Evaluation of film properties

### (5-1) HAZE

Using each polyethylene resin composition of Examples and Comparative Examples, a biaxially stretched film was prepared as follows, and then, haze of the film was measured according to ISO 13468 standard.

### <Preparation of biaxially stretched film>

- Using Bruckner lab extruder line (LID ratio: 42, Screw diameter: 25 mm, Melt/T-Die temperature: 250 °C), a casting sheet of the polyethylene composition was prepared with a thickness of 0.72 mm.
- Using KARO 5.0 apparatus, biaxial stretching to a polyethylene composition film of 90 mm X 90 mm (width X length) was conducted.
- Preheating for 100 seconds at 120 °C, followed by sequential stretching (MD→TD)
- Stretching speed: 300 %/s
- Thickness of the final film (on the basis of stretching ratio 5X8): 20µm

### (5-2) Maximum stretching ratio

When the casting film prepared in the (5-1) evaluation of haze property was biaxially stretched using Bruckner Lab Stretcher KARO 5.0 biaxial stretching machine, a maximum MD/TD stretching ratio at which stretching can be conducted without break of the film or generation of defects, was measured.

### <Measurement conditions>

Sample size : 90 mm × 90 mm
Stretch profile : sequential
Stretch rate : MD 5-6 times, TD 4-9 times
Stretch speed : 100-400 %/s
Stretch temp.: 110-130 °C
Preheat temp.: 100 s.

**[Table 3]**

| | Example | | | |
|---|---|---|---|---|
| | 1 | 2 | 3 | 4 |
| Density [g/cm³] | 0.950 | 0.947 | 0.950 | 0.947 |
| MI_{2.16} [g/10min] | 1.2 | 1.3 | 1.1 | 1.3 |
| Molecular weight distribution shape | bimodal | bimodal | bimodal | bimodal |
| Mw [g/mol] (k=x10³) | 117k | 125k | 119k | 127k |
| MWD | 12.3 | 10.7 | 11.5 | 10.2 |
| Mn [g/mol] | 9512 | 11682 | 10347 | 12450 |
| ratio of the region wherein log Mw Mw≥6.0 | 2.5 | 2.9 | 2.7 | 3.1 |
| ratio of the region wherein log Mw≤3.5 | 9.5 | 8.6 | 9.1 | 8.3 |
| Tm [°C] | 131 | 132 | 131 | 132 |
| Tc [°C] | 116 | 115 | 115 | 115 |
| Processing window [Tm-Tc] [°C] | 15 | 17 | 16 | 17 |
| Film haze [%] | 12 | 7 | 9 | 14 |
| Maximum film stretching ratio (MDXTD) | 5X9 | 6X9 | 6X8 | 5X8 |

**[Table 4]**

| | Comparative Example | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| Density [g/cm³] | 0.9 53 | 0.9 53 | 0.9 50 | 0.9 47 | 0.9 50 | 0.9 47 | 0.9 53 | 0.9 53 | 0.9 61 | 0.9 52 | 0.9 54 | 0.9 55 | 0.9 39 |
| MI_{2.16} [g/10min] | 1.0 | 1.1 | 1.2 | 1.3 | 1.2 | 1.3 | 1.1 | 1.6 | 0.7 | 1.8 | 0.6 | 1.3 | 1.3 |
| Molecular weight distributio n shape | bim oda l | bim oda l | mo no mo dal | mo no mo dal | bim oda l | mo no mo dal | mo no mo dal | bim oda l | mo no mo dal | bim oda l | bim oda l | bim oda l | bim oda l |
| Mw [g/mol] (k=x10³) | 115 k | 117 k | 122 k | 128 k | 124 k | 130 k | 120 k | 108 k | 134 k | 92k | 158 k | 112 k | 131 k |
| MWD | 13. 2 | 13. 0 | 11. 8 | 9.9 | 10. 2 | 9.6 | 11. 2 | 19. 5 | 9.5 | 16. 4 | 10. 2 | 7.5 | 10. 5 |
| Mn [g/mol] | 871 2 | 900 0 | 103 38 | 129 85 | 121 31 | 134 89 | 107 25 | 552 6 | 141 53 | 559 4 | 153 78 | 148 54 | 131 40 |
| ratio of the region wherein log Mw Mw≥6.0 | 2.2 | 1.9 | 2.2 | 3.5 | 3.1 | 3.6 | 2.4 | 1.9 | 4.9 | 1.2 | 5.4 | 2.3 | 2.1 |
| ratio of the region wherein log Mw≤3.5 | 6.9 | 7.2 | 6.2 | 6.0 | 6.4 | 6.1 | 6.7 | 11. 2 | 2.1 | 15. 2 | 1.9 | 2.8 | 7.3 |
| Tm [°C] | 131 | 131 | 132 | 132 | 132 | 132 | 131 | 128 | 134 | 126 | 136 | 134 | 122 |
| Tc [°C] | 117 | 117 | 116 | 116 | 117 | 116 | 116 | 115 | 118 | 112 | 122 | 121 | 110 |
| Processin g window [Tm-Tc] [°C] | 14 | 14 | 16 | 16 | 15 | 16 | 15 | 13 | 16 | 14 | 14 | 13 | 12 |
| Film haze [%] | 35 | 31 | 28 | 29 | 35 | 41 | 37 | 42 | 54 | 26 | 62 | 46 | 10 |
| Maximum film stretching ratio (MDXTD) | 5X 6 | 5X 6 | 5X 7 | 5X 7 | 5X 6 | 5X 6 | 5X 6 | 5X 5 | 5X 4 | 5X 4 | 6X 3 | 5X 4 | 5X 8 |

Further, biaxially stretched films were prepared using the polyethylene resin compositions of Example 4 and Comparative Example 4, and the surfaces of the films were observed.

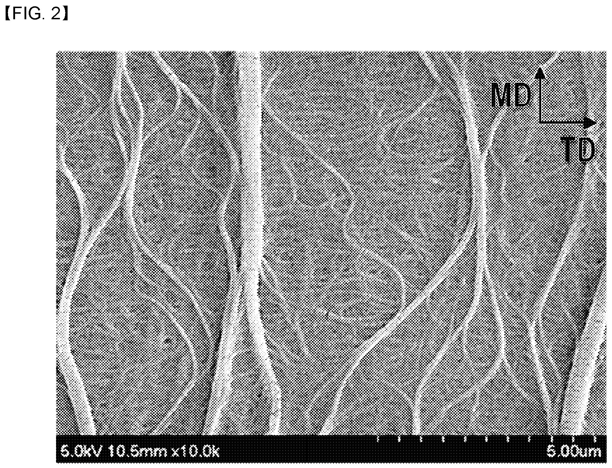

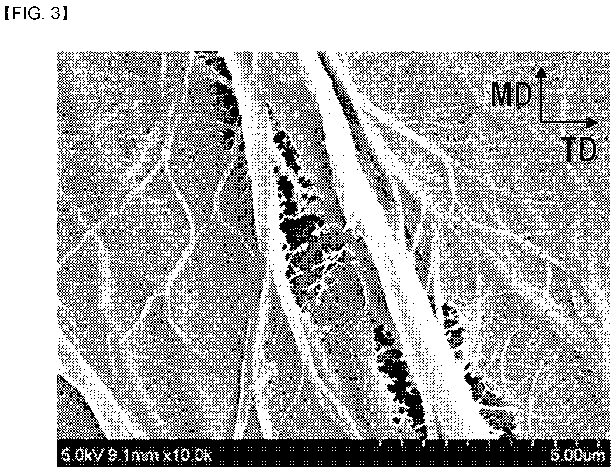

Specifically, biaxially stretched films were prepared by the same method as used in the (5-1) evaluation of haze property, except that each polyethylene resin composition of Example 4 and Comparative Example 4 was used, and stretching ratio was changed to 5X8 and 5X7, respectively. The prepared biaxially stretched films were observed with scanning electron microscope (SEM), and the results were shown in Figs. 2 and 3.

As the result, although break or shrink was not observed in the film prepared using the polyethylene resin composition of Example 4 having high content of low molecular weight polymer, in the case of Comparative Example 4 having low content of low molecular weight polymer, break was observed in the film surface.

## Claims

1. A polyethylene resin composition comprising a copolymer of ethylene and two or more kinds of C4 to C10 alpha olefin comonomers, and
satisfying the requirements of (a1) to (a3):
(a1) density (measured at 23°C according to ISO 1183-2 method): 0.940 to 0.960 g/cm²;
(a2) in gel permeation chromatography (GPC) analysis, in the graph of molecular weight distribution curve wherein the x axis is a log value of weight average molecular weight (log Mw), and the y axis is molecular weight distribution to the log value (dW/dlog Mw), the shape of the molecular weight distribution curve is bimodal;
(a3) in the graph of molecular weight distribution curve, the area ratio of the region wherein log Mw ≥ 6.0 to the total area of the molecular weight distribution curve is 2 to 8%, and the area ratio of the region wherein log Mw ≤ 3.5 is 8 to 15%.

2. The polyethylene resin composition according to claim 1, wherein the polyethylene resin composition has a difference between a melting temperature (Tm) and a crystallization temperature (Tc) (Tm-Tc) of 15°C or more.

3. The polyethylene resin composition according to claim 1, wherein the polyethylene has a melt index (MI_{2.16}) (measured at 190°C under load of 2.16 kg according to ISO 1133 method) of 0.8 to 2.0 g/10 min.

4. The polyethylene resin composition according to claim 1, wherein the polyethylene resin composition has weight average molecular weight (Mw) of 110,000 to 150,000 g/mol.

5. The polyethylene resin composition according to claim 1, wherein the polyethylene resin composition has number average molecular weight (Mn) of 9,000 to 13,000 g/mol.

6. The polyethylene resin composition according to claim 1, wherein the polyethylene resin composition has molecular weight distribution [Mw/Mn] of 10 to 20.

7. The polyethylene resin composition according to claim 1, wherein the polyethylene resin composition has a melting temperature (Tm) of 130 to 135°C.

8. The polyethylene resin composition according to claim 1, wherein the polyethylene resin composition has a crystallization temperature (Tc) of 110 to 120°C.

9. The polyethylene resin composition according to claim 1, wherein the copolymer is prepared by copolymerization of ethylene and two or more kinds of C4 to C10 alpha olefin comonomers, and the alpha olefin comonomers are used in the amount of 0.005 to 5 wt%, based on the total weight of ethylene and alpha olefin comonomers.

10. The polyethylene resin composition according to claim 1, wherein the copolymer is ethylene/1-butene/1-octene copolymer.

11. A stretched film comprising the polyethylene resin composition according to claim 1.

12. The stretched film according to claim 11, wherein the stretched film has a MD (machine direction) stretching ratio of 5 to 6, and a TD (transverse direction) stretching ratio of 6 to 9.

13. The stretched film according to claim 11, wherein the stretched film has a haze value measured according to ISO 13468 of 20% or less, when it is stretched at a stretching ratio of 5X8 and has a thickness of 20µm.
